# EUROPÄISCHE PATENTSCHRIFT

(11) **EP 3 238 993 B1**
(45) Veröffentlichungstag und Bekanntmachung des Hinweises auf die Patenterteilung: **05.07.2023**
(21) Anmeldenummer: 17168525.8
(22) Anmeldetag: 27.04.2017
(51) Int. Cl.: B60Q 1/24, B60Q 1/04

(54) **ARBEITSSCHEINWERFER**
HEADLAMP
PHARE

(30) Priorität: 28.04.2016 DE 102016207306
(43) Veröffentlichungstag der Anmeldung: 01.11.2017
(73) Patentinhaber: HELLA GmbH & Co. KGaA, 59552 Lippstadt (DE)
(72) Erfinder: Krammer, Albert, 7503 Grosspetersdorf (AT)
(74) Vertreter: Grauel, Andreas

(56) Entgegenhaltungen:
- EP-A1- 2 927 051
- EP-A1- 2 927 051
- WO-A2-2015/032795
- DE-A1- 3 942 249
- DE-A1- 10 014 301
- DE-A1-102011 077 282
- DE-A1-102011 089 421
- DE-U1-202015 100 406
- US-A1- 2013 128 603
- US-A1- 2014 268 746

## Beschreibung

### Technisches Gebiet

Die Erfindung betrifft einen Arbeitsscheinwerfer.

### Stand der Technik

Arbeitsscheinwerfer sind im Stand der Technik bekannt. Beispielsweise sind solche Arbeitsscheinwerfer an landwirtschaftlichen Fahrzeugen oder Maschinen angebracht, um die Umgebung zu beleuchten, damit der Fahrer bzw. Bediener der Maschine die zu bearbeitende Fläche auch bei Dunkelheit noch gut erkennen kann, so dass mit dem landwirtschaftlichen Fahrzeug bzw. mit der Maschine auch tageslichtunabhängig gearbeitet werden kann.

Dabei weisen die Arbeitsscheinwerfer unterschiedliche korrelierte Farbtemperaturen auf, die zwischen ca. 2700 K und 7000 K liegen. Je nach Ausgestaltung des Arbeitsscheinwerfers ist der Farbwiedergabeindex allerdings nur sehr ungenügend. Dabei ist der Farbwiedergabeindex, auch Color Rendering Index CRI genannt, eine Kennzahl, mit der die Qualität der Farbwiedergabe von Lichtquellen gleicher korrelierter Farbtemperatur beschrieben wird. Dies bedeutet, dass Arbeitsscheinwerfer mit schlechtem Farbwiedergabeindex die Wiedergabe einzelner oder mehrerer Farben stört, so dass Farben verfälscht erscheinen. Dabei wird der Farbwiedergabeindex üblicherweise zwischen 0 und 100 angegeben, wobei ein optimaler Farbwiedergabeindex bei 100 liegt. Scheinwerfer mit einem Farbwiedergabeindex von deutlich unter 50 werden als weniger geeignet für eine farbtreue Wiedergabe angesehen, so dass eine dauerhafte Ausleuchtung einer Arbeitsumgebung mit einem solchen Arbeitsscheinwerfer als eher störend empfunden wird.

Ein Arbeitsscheinwerfer ist z.B. aus US 2014/268746 A1 bekannt. Ein Fahrzeugscheinwerfer bei dem das Farbspektrum des ausgesendeten Lichts an die Umgebung angepasst werden kann, ist z.B. aus EP 2 927 051 A1 bekannt.

### Darstellung der Erfindung, Aufgabe, Lösung, Vorteile

Es ist die Aufgabe der Erfindung, einen Arbeitsscheinwerfer, zu schaffen, welcher einfach und kostengünstig aufgebaut ist, aber dennoch einen möglichst hohen Lichtstrom erzeugt, wobei der Farbwiedergabeindex auch geeignet hoch sein soll. Auch ist es die Aufgabe, ein Verfahren zur Steuerung eines solchen Scheinwerfers zu schaffen.

Die Aufgabe zum Scheinwerfer wird mit den Merkmalen von Anspruch 1 gelöst.

Die Erfindung betrifft somit einen Arbeitsscheinwerfer, insbesondere für landwirtschaftliche Fahrzeuge, Landmaschinen, Baumaschinen, Flurförderfahrzeuge, Gabelstapler, Waldmaschinen oder Minenfahrzeuge, Schiffe oder Ähnliches, mit einem Gehäuse (2) mit zumindest einer RGBW-LED (4) und/oder zumindest einer LED-Anordnung mit einer R-LED, einer G-LED, einer B-LED und einer W-LED, zur Beleuchtung einer Umgebung (20) und/oder von Objekten (54), wobei weiterhin ein Sensor (19, 55) in das Gehäuse (2) integriert vorgesehen ist, zur optischen Erfassung der Umgebung (20) und/ oder der Objekte (54), mit einer Steuereinheit (9, 56), mittels welcher Sensorsignale des Sensors (19, 55) auswertbar sind, zur Ansteuerung der zumindest einen RGBW-LED (4) und/oder der LED-Anordnung in Abhängigkeit des Sensorsignals zur Anpassung des ausgesendeten Lichts zur Erreichung einer natürlichen Farbdarstellung des Objekts und/oder der Umgebung bei deren Beleuchtung mittels des Arbeitsscheinwerfers, und wobei der Sensor (19, 55) ein Farbsensor oder eine Fotodiode ist oder aufweist.

So ist es vorteilhaft, wenn eine Mehrzahl von RGB-LEDs vorgesehen ist.

Dadurch wird erreicht, dass der gewünscht hohe Lichtstrom durch den Scheinwerfer erzielbar ist. Auch kann es vorteilhaft sein, wenn eine Mehrzahl von RGBW-LEDs vorgesehen ist. Auch dies kann dazu beitragen, dass der erwünschte Lichtstrom erreicht werden kann. Auch ist es zweckmäßig, wenn weiterhin zumindest eine Weißlicht-LED oder eine Mehrzahl von Weißlicht-LEDs vorgesehen ist.

Auch ist es vorteilhaft, wenn eine Mehrzahl von LED-Anordnungen vorgesehen ist. Auch dies kann dazu beitragen, dass der erwünschte Lichtstrom erreicht werden kann. Dabei ist eine LED-Anordnung eine Anordnung von LEDs mit einer R-LED, einer G-LED, einer B-LED und einer W-LED,

Gemäß der Erfindung ist der Sensor ein Farbsensor oder eine Fotodiode.

Dadurch ist die Farbe des angeleuchteten Objekts bzw. der angeleuchteten Umgebung ermittelbar, so dass durch Adaption des von dem Scheinwerfer ausgestrahlten Lichts eine erwünschte Farbwiedergabe des Objekts und/oder der Umgebung erzielt wird. Dies führt dazu, dass die Umgebung bzw. das Objekt in seiner natürlichen Farbe wahrnehmbar ist, so dass beispielweise bei Arbeiten bei Dunkelheit eine natürliche Farbwahrnehmung erreicht wird, was für den Arbeiter bzw. Bediener einer Maschine oder eines Fahrzeugs weniger anstrengend ist als bei falscher Farbwiedergabe.

Weiterhin ist es vorteilhaft, wenn der Sensor ein Wettersensor ist. Dieser kann beispielsweise das Wetter erkennen, wie insbesondere Nebel, Regen, Wind, und/oder Helligkeit etc.

Gemäß der Erfindung ist der Sensor in das Gehäuse integriert.

Auch ist es vorteilhaft, wenn in dem Gehäuse ein Reflektor angeordnet ist, in welchen die LEDs angeordnet sind. Dadurch kann das Licht der LEDs fokussierter ausgestrahlt werden, so dass der Scheinwerfer ein fokussierteres Licht erzeugen kann.

Auch kann in das Gehäuse ein Linsensystem angeordnet sein, wobei die LEDs in dem Gehäuse angeordnet sind.

Auch ist es vorteilhaft, wenn das Gehäuse frontseitig eine lichtdurchlässige Scheibe aufweist und rückseitig ein Gehäusedeckel angeordnet ist. Dadurch kann der Scheinwerfer gegenüber äußeren Einflüssen besser geschützt sein, wie insbesondere eine vorgesehene Steuereinheit und die LEDs.

Besonders vorteilhaft ist es, wenn der Gehäusedeckel aus einem gut wärmeleitenden Material, wie Metall oder Kunststoff, ausgebildet ist und optional mit Kühlrippen versehen ist. Dabei kann der Gehäusedeckel beispielsweise aus Aluminium ausgebildet sein, was sehr gut wärmeleitend ist und gut verarbeitbar ist. Dadurch kann eine gute Kühlung der in dem Gehäuse angeordneten Komponenten, wie der LEDs und/oder der Steuereinheit mit ihren elektronischen Komponenten, erreicht werden.

Besonders vorteilhaft ist es auch, wenn das Gehäuse außenseitig eine Aufnahme für eine Halterung aufweist, insbesondere für eine Schwenkhalterung. Dadurch kann der Scheinwerfer derart eingestellt werden, dass ein spezifisch gewünschter Raumwinkel ausgeleuchtet werden kann. Gegebenenfalls ist auch eine motorische Einstellung und Verstellung des Scheinwerfers vorteilhaft durchführbar.

Die Aufgabe zum Verfahren wird mit den Merkmalen von Anspruch 12 gelöst.

Die Erfindung betrifft ein Verfahren zum Betreiben eines Arbeitsscheinwerfers, wobei die zumindest eine RGBW-LED und/oder die zumindest eine LED-Anordnung in Abhängigkeit des Sensorsignals zur Beleuchtung einer Umgebung und/oder von Objekten angesteuert wird, wobei weiterhin mittels des Sensors die Umgebung und/oder zumindest ein Objekt erfasst wird, wobei mittels der Steuereinheit zumindest ein Sensorsignal des Sensors ausgewertet wird zur Ansteuerung der zumindest einen RGBW-LED und/oder der zumindest einen LED Anordnung in Abhängigkeit des Sensorsignals, so dass ein an die Umgebung und/oder an zumindest ein Objekt adaptiertes Farbspektrum resultiert zur Erreichung einer natürlichen Farbdarstellung des Objekts und/oder der Umgebung bei deren Beleuchtung mittels des Arbeitsscheinwerfers, und wobei der Sensor ein Farbsensor oder eine Fotodiode ist oder aufweist.

Besonders vorteilhaft ist es, wenn die Ansteuerung zur Adaption des Farbspektrums fortlaufend, zyklisch, bedarfsweise oder auf Anforderung erfolgt. So kann beispielsweise eine kontinuierliche bzw. automatisierte Durchführung erfolgen. Alternativ kann auch eine Durchführung erfolgen, wenn dies beispielsweise von einem Bediener ausgelöst wird.

Dabei ist es vorteilhaft, wenn a) der Scheinwerfer in Betrieb genommen wird, b) ein definiertes Farbspektrum automatisch angesteuert wird, c) auf Basis des angesteuerten Farbspektrums mittels des Sensors eine Erfassung der Umgebung und/oder zumindest eines Objekts erfolgt, d) das Farbspektrum aufgrund eines Signals des Sensors adaptiert wird und gegebenenfalls eine optionale Wiederholung des Vorgangs durchgeführt wird. Dadurch wird eine Adaption nach einem Ergebnis des Sensors nach der Inbetriebnahme des Scheinwerfers durchgeführt.

Entsprechend ist es für eine angepasste Adaption vorteilhaft, wenn die Wiederholung des Vorgangs fortlaufend, zyklisch, bedarfsweise oder auf Anforderung erfolgt.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: eine Schnittansicht eines erfindungsgemäßen Scheinwerfers,
- Fig. 2: eine Seitenansicht des erfindungsgemäßen Scheinwerfers,
- Fig. 3: eine Frontansicht des erfindungsgemäßen Scheinwerfers,
- Fig. 4: eine Ansicht des erfindungsgemäßen Scheinwerfers von unten,
- Fig. 5: ein landwirtschaftliches Fahrzeug mit erfindungsgemäßen Scheinwerfern in Betrieb, und
- Fig. 6: ein Schaltbild zur Erläuterung der Erfindung.

### Bevorzugte Ausführung der Erfindung

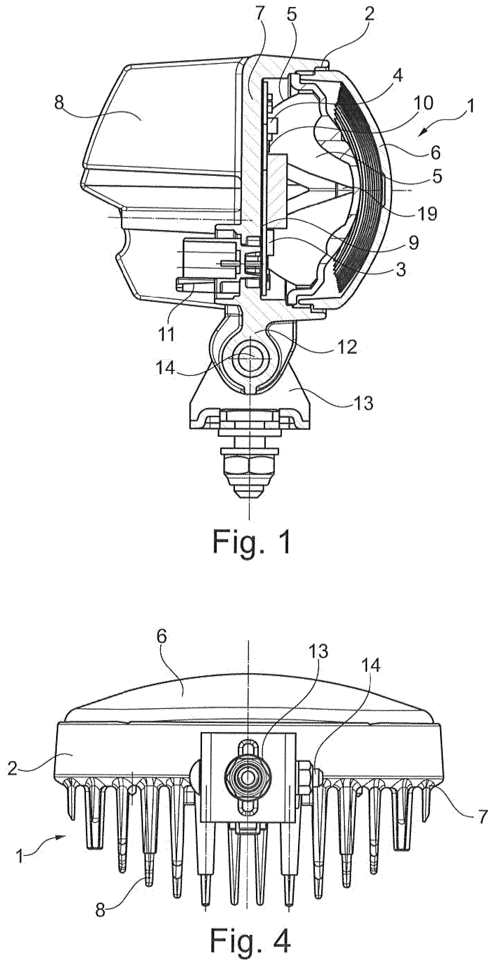

Die Figuren 1 bis 4 zeigen ein Ausführungsbeispiel eines erfindungsgemäßen Scheinwerfers 1 in verschiedenen Ansichten.

Der Scheinwerfer 1 ist beispielsweise einzeln oder in einer Mehrzahl einsetzbar, als Arbeitsscheinwerfer, für landwirtschaftliche Fahrzeuge, Landmaschinen, Baumaschinen, Flurförderfahrzeuge, Gabelstapler, Waldmaschinen oder Minenfahrzeuge, Schiffe oder Ähnliches.

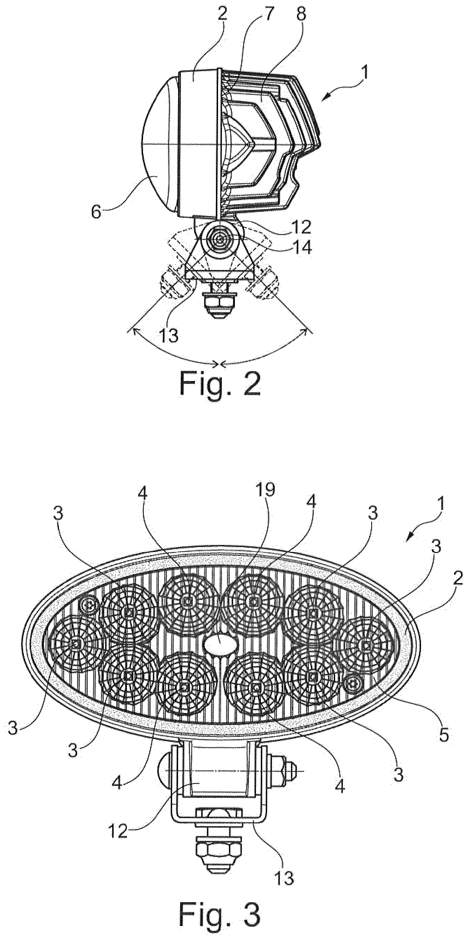

Der Scheinwerfer 1 weist ein Gehäuse 2 auf, in welchem z.B. eine RGB-LED 3 und zumindest eine RGBW-LED 4 angeordnet ist. Die Figur 3 zeigt beispielsweise, dass sechs RGB-LED und vier RGBW-LED vorgesehen sind. Es können aber auch andere Anordnungen oder Anzahlen solcher LEDs vorgesehen sein. Insbesondere kann auch nur eine RGB-LED oder eine Mehrzahl von RGB-LEDs vorgesehen sein. Alternativ oder zusätzlich ist zumindest eine RGBW-LED oder eine Mehrzahl von RGBW-LEDs vorgesehen. Unterstützend kann weiterhin zumindest eine Weißlicht-LED oder eine Mehrzahl von Weißlicht-LEDs vorgesehen sein.

Die oben genannten LEDs werden in einem Reflektor 5 angeordnet, welcher die LEDs teilweise umgibt, so dass das in seitliche und/oder rückwärtige Richtung emittierte Licht nach vorn zur Frontseite reflektiert wird. An der Frontseite weist das Gehäuse 2 eine lichtdurchlässige Scheibe 6 auf. An der Rückseite ist ein Gehäusedeckel 7 angeordnet. Der Gehäusedeckel 7 ist dabei aus einem gut wärmeleitenden Material, wie Metall oder Kunststoff, insbesondere Aluminium, ausgebildet. Vorteilhaft sind optional Kühlrippen 8 an dem Gehäusedeckel 7 ausgebildet, um durch Wechselwirkung mit einer Luftströmung eine Kühlung der elektronischen Komponenten in dem Gehäuse 2 zu bewirken. In dem Gehäuse 2 ist eine Steuereinheit 9 angeordnet, welche elektronische Komponenten 10 trägt. Rückseitig ist die Steuereinheit 9 mit einem Stecker 11 versehen, der am Gehäusedeckel 7 eingesetzt bzw. angeordnet ist. Der Stecker 11 dient dazu, den Scheinwerfer 1 elektrisch zu versorgen.

Der Scheinwerfer 1 weist am Gehäuse 2 außenseitig eine Aufnahme 12 für eine Halterung 13 auf, insbesondere für eine Schwenkhalterung. Der Scheinwerfer 1 ist entsprechend um eine Schwenkachse 14 verschwenkbar.

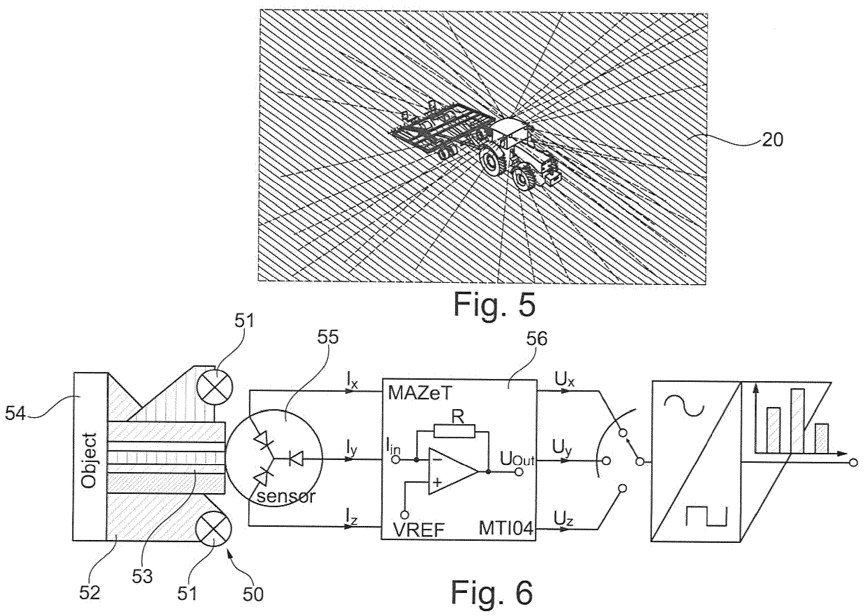

Der Scheinwerfer 1 beleuchtet im eingeschalteten Zustand die Umgebung 20 oder Objekte, siehe Figur 5.

Der oder die Scheinwerfer 1 dient bzw. dienen der Beleuchtung der Umgebung 20 und/oder von Objekten, wobei weiterhin ein Sensor 19 vorgesehen ist, zur optischen Erfassung der Umgebung 20 und/oder der Objekte. Der Sensor 19 ist mit der Steuereinheit 9 verbunden, um Sensorsignale zur Steuereinheit 9 weiterzuleiten, um die LEDs anzusteuern.

Mittels der Steuereinheit 9 werden die Sensorsignale des Sensors 19 ausgewertet, zur Ansteuerung der zumindest einen RGBW-LED 4 in Abhängigkeit des Sensorsignals.

Gemäß dem Erfindungsgedanken ist der Sensor 19 ein Farbsensor oder eine Fotodiode. Der Sensor 19 erkennt von der Umgebung 20 oder zumindest von einem Objekt ein Farbspektrum von zurückgestreutem Licht, um das Farbspektrum der LEDs, wie RGW-LED bzw. RGBW-LED oder Weißlicht-LED, zu steuern.

Gemäß der Erfindung ist der Sensor 19 in das Gehäuse 2 integriert.

Die Figur 6 zeigt in einem Schaltbild, in welchem der erfindungsgemäße Scheinwerfer 50 mit verschiedenen LEDs 51 dargestellt ist. Die LEDs 51 senden Licht 52 aus, das ein vordefiniertes Farbspektrum 53 aufweist. Das Licht 52 fällt auf ein Objekt 54 und/oder auf die Umgebung. Das von dem Objekt 54 und/oder von der Umgebung reflektierte Licht wird von einem Sensor 55 detektiert. Der Sensor 55 detektiert das Licht und analysiert das Farbspektrum und erzeugt für die Grundfarben rot, blau und grün einen jeweiligen Strom lx, ly, lz als Sensorsignal. Diese Sensorsignale lx, ly, lz werden an eine Steuereinheit 56 weitergeleitet, welche die Ansteuerung der LEDs vornimmt. Die Steuereinheit 56 bestimmt dabei das Farbspektrum des Lichts der LEDs 51, um ein vordefiniertes Farbspektrum des rückgestreuten Lichts der Umgebung bzw. des zumindest einen Objekts. So kann ein natürliches oder nahezu optimales Farbspektrum des rückgestreuten Lichts erzielt werden.

Der Scheinwerfer dient zur Durchführung eines Verfahren zum Betreiben des Scheinwerfers, wobei die zumindest eine RGBW-LED und/oder die zumindest eine LED-Anordnung zur Beleuchtung einer Umgebung und/oder von Objekten angesteuert wird, wobei weiterhin mittels des Sensors die Umgebung und/oder zumindest ein Objekt erfasst wird, wobei mittels der Steuereinheit zumindest ein Sensorsignal des Sensors ausgewertet wird zur Ansteuerung der zumindest einen RGBW-LED und/oder der zumindest einen LED-Anordnung in Abhängigkeit des Sensorsignals, so dass ein an die Umgebung und/oder an zumindest ein Objekt adaptiertes Farbspektrum resultiert.

Dabei kann die Ansteuerung zur Adaption des Farbspektrums fortlaufend, zyklisch, bedarfsweise oder auf Anforderung erfolgen.

Das Verfahren kann schrittweise erfolgen. In einem ersten Schritt a) wird der Scheinwerfer in Betrieb genommen. In einem zweiten Schritt b) wird ein definiertes Farbspektrum automatisch angesteuert. In einem dritten Schritt c) erfolgt auf Basis des angesteuerten Farbspektrums mittels des Sensors eine Erfassung der Umgebung und/oder zumindest eines Objekts. In einem vierten Schritt d) wird das Farbspektrum aufgrund eines Signals des Sensors adaptiert. Es kann durchaus eine optionale Wiederholung des Vorgangs durchgeführt werden. Die Wiederholung des Vorgangs erfolgt dabei insbesondere fortlaufend, zyklisch, bedarfsweise oder auf Anforderung,

### Bezugszeichenliste

- 1: Scheinwerfer
- 2: Gehäuse
- 3: RGB-LED
- 4: RGBW-LED
- 5: Reflektor
- 6: lichtdurchlässige Scheibe
- 7: Gehäusedeckel
- 8: Kühlrippen
- 9: Steuereinheit
- 10: elektronische Komponenten
- 11: Stecker
- 12: Aufnahme
- 13: Halterung
- 14: Schwenkachse
- 19: Sensor
- 20: Umgebung
- 50: Scheinwerfer
- 51: verschiedene LEDs
- 52: Licht
- 53: Farbspektrum
- 54: Objekt
- 55: Sensor
- 56: Steuereinheit

## Patentansprüche

1. Arbeitsscheinwerfer (1, 50), insbesondere für landwirtschaftliche Fahrzeuge, Landmaschinen, Baumaschinen, Flurförderfahrzeuge, Gabelstapler, Waldmaschinen oder Minenfahrzeuge, Schiffe oder Ähnliches, mit einem Gehäuse (2) mit zumindest einer RGBW-LED (4) und/oder zumindest einer LED-Anordnung mit einer R-LED, einer G-LED, einer B-LED und einer W-LED, zur Beleuchtung einer Umgebung (20) und/oder von Objekten (54), wobei weiterhin ein Sensor (19, 55) in das Gehäuse (2) integriert vorgesehen ist, zur optischen Erfassung der Umgebung (20) und/oder der Objekte (54), mit einer Steuereinheit (9, 56), mittels welcher Sensorsignale des Sensors (19, 55) auswertbar sind, zur Ansteuerung der zumindest einen RGBW-LED (4) und/oder der zumindest einen LED-Anordnung in Abhängigkeit des Sensorsignals zur Anpassung des ausgesendeten Lichts zur Erreichung einer natürlichen Farbdarstellung des Objekts und/oder der Umgebung bei deren Beleuchtung mittels des Arbeitsscheinwerfers, und wobei der Sensor (19, 55) ein Farbsensor oder eine Fotodiode ist oder aufweist.

2. Arbeitsscheinwerfer (1, 50) nach Anspruch 1, **dadurch gekennzeichnet, dass** eine RGB-LED (3) oder eine Mehrzahl von RGB-LEDs (3) vorgesehen ist.

3. Arbeitsscheinwerfer (1, 50) nach Anspruch 1 oder 2, **dadurch gekennzeichnet, dass** eine Mehrzahl von RGBW-LEDs (4) vorgesehen ist.

4. Arbeitsscheinwerfer (1, 50) nach Anspruch 1, 2 oder 3, **dadurch gekennzeichnet, dass** eine Mehrzahl von LED-Anordnungen vorgesehen ist.

5. Arbeitsscheinwerfer (1, 50) nach einem der vorhergehenden Ansprüche, **dadurch gekennzeichnet, dass** weiterhin zumindest eine Weißlicht-LED oder eine Mehrzahl von Weißlicht-LEDs vorgesehen ist.

6. Arbeitsscheinwerfer (1, 50) nach einem der vorhergehenden Ansprüche, **dadurch gekennzeichnet, dass** der Sensor (19, 55) ein Wettersensor ist oder aufweist.

7. Arbeitsscheinwerfer (1, 50) nach einem der vorhergehenden Ansprüche, **dadurch gekennzeichnet, dass** in dem Gehäuse (2) ein Reflektor (5) angeordnet ist, in welchen die LEDs (3, 4, 51) angeordnet sind.

8. Arbeitsscheinwerfer (1, 50) nach einem der vorhergehenden Ansprüche, **dadurch gekennzeichnet, dass** in dem Gehäuse (2) ein Linsensystem angeordnet ist, wobei die LEDs (3, 4, 51) in dem Gehäuse angeordnet sind.

9. Arbeitsscheinwerfer (1, 50) nach einem der vorhergehenden Ansprüche, **dadurch gekennzeichnet, dass** das Gehäuse (2) frontseitig eine lichtdurchlässige Scheibe (6) aufweist und rückseitig ein Gehäusedeckel (7) angeordnet ist.

10. Arbeitsscheinwerfer (1, 50) nach einem der vorhergehenden Ansprüche, **dadurch gekennzeichnet, dass** der Gehäusedeckel (7) aus einem gut wärmeleitenden Material, wie Metall oder Kunststoff, ausgebildet ist und optional mit Kühlrippen (8) versehen ist.

11. Arbeitsscheinwerfer (1, 50) nach einem der vorhergehenden Ansprüche, **dadurch gekennzeichnet, dass** das Gehäuse (2) außenseitig eine Aufnahme (12) für eine Halterung (13) aufweist, insbesondere für eine Schwenkhalterung.

12. Verfahren zum Betreiben eines Arbeitsscheinwerfers (1, 50) nach einem der vorhergehenden Ansprüche, wobei die zumindest eine RGBW-LED (4) und/oder zumindest eine LED-Anordnung mit einer R-LED, einer G-LED, einer B-LED und einer W-LED zur Beleuchtung einer Umgebung (20) und/oder von Objekten (54) angesteuert wird, wobei weiterhin mittels des Sensors (19, 55) die Umgebung (20) und/oder zumindest ein Objekt (54) erfasst wird, wobei mittels der Steuereinheit (9, 56) zumindest ein Sensorsignal des Sensors (19, 55) ausgewertet wird zur Ansteuerung der zumindest einen RGBW-LED (4) und/oder der zumindest einen LED-Anordnung in Abhängigkeit des Sensorsignals, so dass ein an die Umgebung (20) und/oder an zumindest ein Objekt (54) adaptiertes Farbspektrum (53) resultiert zur Erreichung einer natürlichen Farbdarstellung des Objekts und/oder der Umgebung bei deren Beleuchtung mittels des Arbeitsscheinwerfers, und wobei der Sensor (19, 55) ein Farbsensor oder eine Fotodiode ist oder aufweist.

13. Verfahren nach Anspruch 12, **dadurch gekennzeichnet, dass** die Ansteuerung zur Adaption des Farbspektrums (53) fortlaufend, zyklisch, bedarfsweise oder auf Anforderung erfolgt.

14. Verfahren nach Anspruch 12 oder 13, **dadurch gekennzeichnet, dass** a) der Scheinwerfer (1, 50) in Betrieb genommen wird, b) ein definiertes Farbspektrum (53) automatisch angesteuert wird, c) auf Basis des angesteuerten Farbspektrums (53) mittels des Sensors (19, 55) eine Erfassung der Umgebung (20) und/oder zumindest eines Objekts (54) erfolgt, d) das Farbspektrum (53) aufgrund eines Signals des Sensors (19, 55) adaptiert wird und gegebenenfalls eine optionale Wiederholung des Vorgangs durchgeführt wird.

15. Verfahren nach Anspruch 14, **dadurch gekennzeichnet, dass** die Wiederholung des Vorgangs fortlaufend, zyklisch, bedarfsweise oder auf Anforderung erfolgt.

## Claims

1. A work light (1, 50), in particular for agricultural vehicles, agricultural machines, construction machines, industrial vehicles, forklifts, forest machines or mining vehicles, vessels or the like, with a housing (2) with at least one RGBW-LED (4) and/or at least one LED arrangement with an R-LED, a G-LED, a B-LED and a W-LED, for illuminating an environment (20) and/or objects (54), wherein furthermore a sensor (19, 55) is provided integrated into the housing (2), for optical detection of the environment (20) and/or the objects (54), with a control unit (9, 56) by means of which sensor signals of the sensor (19, 55) can be evaluated, for controlling the at least one RGBW-LED (4) and/or the at least one LED arrangement as a function of the sensor signal for adaptation of the emitted light in order to reach a natural colour representation of the object and/or the environment as they are illuminated by means of the work light, and wherein the sensor (19, 55) is or has a colour sensor or a photodiode.

2. The work light (1, 50) according to claim 1, **characterised in that** an RGB-LED (3) or a plurality of RGB-LEDs (3) is provided.

3. The work light (1, 50) according to claim 1 or 2, **characterised in that** a plurality of RGBW-LEDs (4) is provided.

4. The work light (1, 50) according to claim 1, 2 or 3, **characterised in that** a plurality of LED arrangements is provided.

5. The work light (1, 50) according to one of the preceding claims, **characterised in that** furthermore at least one white light LED or a plurality of white light LEDs is provided.

6. The work light (1, 50) according to one of the preceding claims, **characterised in that** the sensor (19, 55) is or has a weather sensor.

7. The work light (1, 50) according to one of the preceding claims, **characterised in that** a reflector (5) in which the LEDs (3, 4, 51) are arranged is arranged in the housing (2).

8. The work light (1, 50) according to one of the preceding claims, **characterised in that** a line system is arranged in the housing (2), wherein the LEDs (3, 4, 51) are arranged in the housing.

9. The work light (1, 50) according to one of the preceding claims, **characterised in that** the housing (2) has a translucent disc (6) on its front side and a housing lid (7) is arranged on the back side.

10. The work light (1, 50) according to one of the preceding claims, **characterised in that** the housing lid (7) is formed from a highly thermally conductive material such as metal or plastic and is optionally provided with cooling fins (8).

11. The work light (1, 50) according to one of the preceding claims, **characterised in that** the housing (2) has a receptacle (12) for a holder (13), in particular for a swivel holder, on its outside.

12. A method for operating a work light (1, 50) according to one of the preceding claims, wherein the at least one RGBW-LED (4) and/or at least one LED arrangement with an R-LED, a G-LED, a B-LED and a W-LED is controlled for illuminating an environment (20) and/or objects (54), wherein furthermore the environment (20) and/or at least one object (54) is detected by means of the sensor (19, 55), wherein at least one sensor signal of the sensor (19, 55) is evaluated by means of the control unit (9, 56) for controlling the at least one RGBW-LED (4) and/or the at least one LED arrangement as a function of the sensor signal so that a colour spectrum (53) adapted to the environment (20) and/or to at least one object (54) results in order to reach a natural colour representation of the object and/or the environment as they are illuminated by means of the work light, and wherein the sensor (19, 55) is or has a colour sensor or a photodiode.

13. The method according to claim 12, **characterised in that** the control for adaptation of the colour spectrum (53) is continuous, cyclical, as needed or upon request.

14. The method according to claim 12 or 13, **characterised in that** a) the light (1, 50) is operated, b) a defined colour spectrum (53) is automatically controlled, c) the environment (20) and/or at least one object (54) is detected based on the controlled colour spectrum (53) by means of the sensor (19, 55), d) the colour spectrum (53) is adapted due to a signal of the sensor (19, 55) and optionally an optional repetition of the procedure is performed.

15. The method according to claim 14, **characterised in that** the repetition of the procedure is continuous, cyclical, as needed or upon request.

## Revendications

1. Projecteur de travail (1, 50), en particulier pour des véhicules agricoles, des machines agricoles, des machines de construction, des chariots de manutention, des chariots élévateurs à fourche, des machine forestières ou des véhicules miniers, des navires ou similaires, comprenant un boîtier (2) comportant au moins une LED RGBW (4) et/ou au moins un agencement de LED comprenant une LED rouge, une LED verte, une LED bleue et une LED blanche, servant à l'éclairage d'un environnement (20) et/ou d'objets (54), projecteur de travail dans lequel il est prévu en outre un capteur (19, 55) intégré dans le boîtier (2), ledit capteur servant à la détection optique de l'environnement (20) et/ou des objets (54), comprenant une unité de commande (9, 56) au moyen de laquelle des signaux du capteur (19, 55) sont exploitables, ladite unité de commande servant à la commande de l'au moins une LED RGBW (4) et/ou de l'au moins un agencement de LED, en fonction du signal de capteur servant à l'adaptation de la lumière émise, afin d'obtenir une représentation naturelle des couleurs de l'objet et/ou de l'environnement lors de leur éclairage au moyen du projecteur de travail, et projecteur de travail dans lequel le capteur (19, 55) est ou présente un capteur de couleur ou une photodiode.

2. Projecteur de travail (1, 50) selon la revendication 1, **caractérisé en ce qu'**il est prévu une LED RGB (3) ou une pluralité de LED RGB (3).

3. Projecteur de travail (1, 50) selon la revendication 1 ou 2, **caractérisé en ce qu'**il est prévu une pluralité de LED RGBW (4).

4. Projecteur de travail (1, 50) selon la revendication 1, 2 ou 3, **caractérisé en ce qu'**il est prévu une pluralité d'agencements de LED.

5. Projecteur de travail (1, 50) selon l'une quelconque des revendications précédentes, **caractérisé en ce qu'**il est prévu en outre au moins une LED à lumière blanche ou bien une pluralité de LED à lumière blanche.

6. Projecteur de travail (1, 50) selon l'une quelconque des revendications précédentes, **caractérisé en ce que** le capteur (19, 55) est ou présente un capteur météo.

7. Projecteur de travail (1, 50) selon l'une quelconque des revendications précédentes, **caractérisé en ce qu'**un réflecteur (5) est disposé dans le boîtier (2), réflecteur dans lequel sont disposées les LED (3, 4, 51).

8. Projecteur de travail (1, 50) selon l'une quelconque des revendications précédentes, **caractérisé en ce qu'**un système de lentilles est disposé dans le boîtier (2), projecteur de travail dans lequel les LED (3, 4, 51) sont disposées dans le boîtier.

9. Projecteur de travail (1, 50) selon l'une quelconque des revendications précédentes, **caractérisé en ce que** le boîtier (2) présente, côté frontal, une vitre translucide (6), et un couvercle de boîtier (7) est disposé côté arrière.

10. Projecteur de travail (1, 50) selon l'une quelconque des revendications précédentes, **caractérisé en ce que** le couvercle de boîtier (7) est composé d'un matériau qui conduit bien la chaleur, comme le métal ou le plastique, et est doté éventuellement d'ailettes de refroidissement (8).

11. Projecteur de travail (1, 50) selon l'une quelconque des revendications précédentes, **caractérisé en ce que** le boîtier (2) présente, côté extérieur, un logement (12) pour un support (13), en particulier pour un support pivotant.

12. Procédé de fonctionnement d'un projecteur de travail (1, 50) selon l'une quelconque des revendications précédentes, procédé dans lequel est commandé(e) l'au moins une LED RGBW (4) et/ou l'au moins un agencement de LED comprenant une LED rouge, une LED verte, une LED bleue et une LED blanche, servant à l'éclairage d'un environnement (20) et/ou d'objets (54), procédé dans lequel l'environnement (20) et/ou au moins un objet (54) est détecté en outre au moyen du capteur (19, 55), procédé dans lequel est exploité au moins un signal du capteur (19, 55) au moyen de l'unité de commande (9, 56) servant à la commande de l'au moins une LED RGBW (4) et/ou de l'au moins un agencement de LED, en fonction du signal de capteur, de sorte qu'il en résulte un spectre de couleurs (53) adapté à l'environnement (20) et/ou à au moins un objet (54), afin d'obtenir une représentation naturelle des couleurs de l'objet et/ou de l'environnement lors de leur éclairage au moyen du projecteur de travail, et procédé dans lequel le capteur (19, 55) est ou présente un capteur de couleur ou une photodiode.

13. Procédé selon la revendication 12, **caractérisé en ce que** la commande servant à l'adaptation du spectre de couleurs (53) se produit de façon continue, de façon cyclique, si nécessaire ou à la demande.

14. Procédé selon la revendication 12 ou 13, **caractérisé en ce que** a) le projecteur (1, 50) est mis en service, b) un spectre de couleurs (53) défini est commandé automatiquement, c) sur la base du spectre de couleurs (53) commandé, une détection de l'environnement (20) et/ou d'au moins un objet (54) se produit au moyen du capteur (19, 55), d) le spectre de couleurs (53) est adapté en raison d'un signal du capteur (19, 55) et, le cas échéant, une répétition éventuelle du processus est effectuée.

15. Procédé selon la revendication 14, **caractérisé en ce que** la répétition du processus se produit de façon continue, de façon cyclique, si nécessaire ou à la demande.
